# EUROPEAN PATENT SPECIFICATION

(11) **EP 2 306 849 B1**
(45) Date of publication and mention of the grant of the patent: **30.11.2011**
(21) Application number: 09802483.9
(22) Date of filing: 17.07.2009
(51) Int. Cl.: A23L 1/16, A23L 1/305, A23L 1/308, A23L 1/162

(54) **PASTA COMPOSITION FOR DEHYDRATED FOOD MATRICES**
TEIGZUSAMMENSETZUNG FÜR DEHYDRIERTE LEBENSMITTELMATRIZEN
COMPOSITION DE PÂTE POUR MATRICES ALIMENTAIRES DÉSHYDRATÉES

(30) Priority: 28.07.2008 EP 08161253
(43) Date of publication of application: 13.04.2011
(73) Proprietor: Nestec S.A., 1800 Vevey (CH)
(72) Inventor: BATTAINI, Giuseppe, 78467 Konstanz (DE); FEZER, Ramona, 78224 Singen (DE); ROTH, Niklaus, CH-8451 Kleinandelfingen (CH); LAGARRIGUE, Sophie, 78462 Konstanz (DE)
(86) International application number: PCT/EP2009/059236
(87) International publication number: WO 2010/012614

(56) References cited:
- EP-A- 1 785 192
- WO-A-2004/084636
- US-A1- 2004 224 068
- LAZARIDOU ET AL: "Molecular aspects of cereal beta-glucan functionality: Physical properties, technological applications and physiological effects" JOURNAL OF CEREAL SCIENCE, ACADEMIC PRESS LTD, XX, vol. 46, no. 2, 6 August 2007 (2007-08-06) , pages 101-118, XP022185201 ISSN: 0733-5210 cited in the application

## Description

### Field of the invention

The present invention relates to a dry pasta composition comprising a combination of protein and fibres including beta-glucans suitable for use in instant food products such as dehydrated soup. The dry pasta composition has a particularly satiating effect when rehydrated and consumed. The invention further relates to the use of said pasta compositions for inducing satiety in food compositions and to a method of preparing satiety-inducing food compositions.

### Background of the invention

In the context of health and weight management, a number of approaches have been suggested to increase the fullness sensation upon consumption of food.

In food compositions in general, the two most important factors for inducing satiety are generally considered to be protein and fibres. However, generally they are used at high dosage which is detrimental to the product sensory attributes and organoleptic properties.

In particular, it has been difficult to increase the amount of protein and/or fibre in pasta products as this generally compromises the texture and the organoleptic properties.

Furthermore, these high protein and fibre amounts are difficult to incorporate into dry food compositions due to technological and/or sensory issues.

Recent developments for increasing the protein and/or fibre content of pasta are described for example in US2004/0224068, WO02/35945, WO2004/084636, US2004/224068, WO00/25590, WO91/00695, WO 02/30217, WO2005/107499, IT1264492, US2004/0241303, EP 0412639, US2006/0134295, US 3,992,554, WO2005/120252.

Generally, the increased protein level of pasta is provided by soy-based products or wheat proteins. From an organoleptic point of view, these solutions are not ideal especially when they are applied to short cooking applications Furthermore, the increased level of fibre has generally been added to the compositions with the aim of reducing the caloric value of said compositions.

A further problem with dehydrated food matrices is the requirement for rapid reconstitution in hot liquids, while traditional pasta compositions require a cooking time of about 10 minutes in boiling water.

### Object of the invention

There is therefore still a need to provide pasta compositions suitable for inclusion in short cooking dehydrated food matrices, which comprise a combination of fiber and protein induce satiety upon consumption and which have good organoleptic properties.

### Summary of the invention

This object is solved by the present independent claims. The dependent claims further develop the central idea of the invention.

Thus, in a first aspect the invention pertains to dry pasta composition, comprising at least 19% protein, at least 9% fibres, wherein the fibres are selected such that the pasta composition comprises at least 2% beta-glucan and the protein comprises at least 5% dairy protein.

In a second aspect, the use of a pasta composition according to any of claims 1 to 7 in dehydrated food compositions is provided.

A further aspect of the invention relates to the use of a pasta composition according to any of claims 1 to 7 in a food composition for inducing satiety upon consumption of said food composition.

Finally, a method for the preparation of a satiety-inducing food composition comprising the step of
a. providing a pre-cooked dry pasta composition according to any of claims 1 to 7 and
b. further processing the pasta composition also forms part of the invention.

### Description of the invention

Unless otherwise indicated, all percentages in the present description are percentages by weight.

The present invention relates to a dry pasta composition. By pasta is to be understood an unleavened kneaded and extruded dough composition made principally of wheat. Pasta is to be differentiated from noodles, since noodles are based on flours with lower protein content and are not formed by extrusion but by sheeting and cutting or stretching.

Preferably, the pasta composition of the invention is made with durum semolina. Typically, the amount of durum semolina is at least 55%, preferably at least 60%. The pasta composition may further comprise egg and other starch sources. The moisture content of such dry pasta is typically less than 15%. Preferably, the fat content of the pasta composition is less than 5%, typically about 2%.

Depending on the cooking conditions and time that should to be achieved, short cooking pasta can be obtained either via extrusion with specific thin walls dies (<0.7 mm) or via precooking procedures or via combinations of the two previous means. The pasta of the invention can be pre-cooked. In this case, the starch in the pasta composition is at least partially gelatinised. Pre-cooking can be carried out by any method known in the art. For example, it can be done by cooking the pasta by any means (boiling water, microwave etc.) for 5 minutes, and then drying the pasta to provide the pre-cooked dry pasta composition of the invention.

The advantage of the pre-cooked pasta is that it can be quickly prepared without needing to boil in water for 10 minutes, as normally required for traditional pasta products. Thus, the pre-cooked pasta lends itself perfectly to instant food compositions, which can be prepared in up to 5 minutes. The pasta of the invention can thus be incorporated into dehydrated instant soup composition, instant pasta-based meals etc.

The pasta of the invention comprises at least 19% protein. In a preferred embodiment, the pasta composition comprises 19-30%, preferably 20-30%, more preferably 20-21% protein. The protein may be selected from any of dairy protein, meat protein, non soy derived leguminous protein, cereal protein, meat or fish protein and meat or fish protein hydrolysate or any mixtures thereof. Under dairy protein, we understand whey protein, casein, caseinates, casein glycomacropeptides. The legume protein comprises soy protein. According to the present invention, the protein is not soy protein. Indeed, soy proteins generally lead to products having poor organoleptic properties. Furthermore, products with soy protein may raise consumer acceptance issues due to a great amount of soy crops being genetically modified.

The pasta may comprise wheat gluten in an amount of less than 5%, typically about 3%.

The present composition comprises at least 5% dairy protein. Dairy protein may be provided by liquid milk, milk powder, skim milk powder or any other form of milk such as isolates or concentrates. Indeed, it has been found that the presence of dairy protein is advantageous not only to the taste of the product but also to its texture. The texture of the product would in fact be compromised by the high content of fibre present (at least 9%). The presence of at least 5% dairy protein allows to conserve good organoleptic properties despite the high fibre content.

As stated above, the present pasta composition comprises at least 9% fibres. In a preferred embodiment, the pasta composition comprises 9-20% fibres. Fibres may be selected from any of vegetables, whole cereals such as barley, oat etc., legumes such as peas, gums such as guar gum, acacia gum and inulins and any mixtures thereof. They may preferably be from grains, bran and wholegrain products.

Preferably, the fibres consist at least of 20% soluble viscous fibres.

Soluble viscous fibres can be provided, for example, by oats, barley, beans, soybeans, peas, methylcellulose, glucomannan, guar, locust bean gum, sugar beet, gum arabic, pectin, certain vegetables such as okra and eggplant and citrus fruits.

The fibres in the present pasta composition are selected such that the pasta composition comprises at least 2% beta-glucan. Preferably, the pasta composition comprises at least 3% beta-glucan.

The total fibre content in the composition may be assessed by methods known in the art such as the method AOAC 985.29, whereby specific fibre content (e.g. beta-glucan content) can be assessed by other methods such as AOAC 995.16.

Beta-glucans, also called beta 1,3-D glucans, are polysaccharides that only contain glucose as structural components. Beta 1,3-D glucans are chains of D-glucose molecules, with the six-sided D-glucose rings connected at the 1 and 3 positions (Journal of Cereal Science, 46 (2007), 101-118).

Beta-glucan may be provided by oats and/or barley and/or beta-glucan concentrates. By beta-glucan concentrates are meant sources having a high content of beta-glucan. Such beta-glucan concentrates are commercially available, for example, under the trade name of Oatwell®.

Natural sources of beta-glucans such as oat typically contain about 4% beta-glucan, while barley may comprise up to 10% beta-glucan. Beta-glucan concentrates comprise at least 10%, preferably at least 20% beta-glucan.

Preferably, the protein and fibre present in the pasta compositions of the invention have not been modified, i.e. have not been subjected to processing prior to inclusion in the pasta composition of the present invention.

In a preferred embodiment, the pasta composition of the invention comprises 19-30% protein, 9-20% fibres, wherein the fibres are selected such that the beta-glucan content is at least 2%.

The pasta compositions of the invention are used according to the invention in dehydrated food compositions, such as soup, pasta-based meal etc. Preferably, these food compositions are instant, i.e. they may be prepared within up to 5 minutes.

The pasta compositions may be used in dehydrated food compositions in an amount of 10-90%, preferably in an amount of at least 20%.

The pasta compositions may therefore act as protein and fibre carrier in the food compositions.

It has further been found that the pasta composition of the invention has an increased effect on satiety induction.

Thus, the invention in a further aspect, relates to the use of a pasta composition according to any of the embodiments described herein in a food composition for inducing satiety upon consumption of said food composition.

Satiety is a physiological response which can be assessed according to methods known to the skilled person and described for example in Am. J. Clin. Nutr. 76:1023-1030 (2002).

In addition to its satiety inducing effect, the presence of beta-glucan in the pasta compositions helps improve cholesterol levels as well as confers a low glycemic index to said food compositions. The glycemic index (GI) indicates the rate at which glucose is released in the blood upon consumption. Typically, the glycemic index of the present products is evaluated as less than medium.

Thus, the use of the present pasta composition in food composition has combined benefits which confer healthy attributes to the food compositions. Indeed, the combination of satiety induction, cholesterol and blood sugar control render the food composition attractive to the consumer.

The presence of a high amount of protein and fibres such as beta-glucans has the added benefit that the food composition has an even more pronounced effect on satiety upon consumption (Journal of Cereal Science, 46 (2007), 101-118).

Preferably, the dry food composition after addition of the pasta composition of the invention comprises at least 17% protein. Additionally, the food composition may comprise at least 3% fibres.

The pasta composition of the invention may therefore be used as a protein and fibre carrier in food matrices.

In yet a further aspect of the invention, a method for the preparation of a satiety-inducing food composition is provided. The method comprises the step of providing a pre-cooked dry pasta composition as described above. Any embodiment of the pre-cooked dry pasta composition described herein can be used in the present method.

The pasta composition is then further processed according to the method of the invention. Further processing includes cooking or soaking in a liquid having a temperature of at least 80°C. Cooking may be carried out on a stove or in a microwave.

The liquid may be water, milk, broth etc. Cooking or soaking is preferably carried out for up to 5 minutes. Therefore, the pasta composition is prepared very quickly, which is ideal for use in dehydrated instant food products such as instant soup, instant pasta-based meal, etc.

The present invention thus offers the advantages of providing a way to enhance the satiety effect of food composition. In particular, it provides pasta compositions which are adapted for use in dehydrated food matrices, which may be prepared rapidly compared to conventional pasta composition and at the same time offer the health benefits of satiety, high fibre and protein content, and further health benefits such as cholesterol control and low glycemic index. The product of the invention also has good organoleptic properties in terms of taste and texture, which is not straightforward when high levels of fibres and protein are used.

The pasta composition of the invention can therefore be used as a protein and fibre carrier in dehydrated food compositions such as dehydrated soups, wherein increasing the amount of fibre and protein is technologically difficult.

The present invention is further illustrated hereinafter by the means of the non-limiting examples.

### Examples

### Example 1

A typical composition for the pasta of the invention is shown in the table below.

| **Ingredient** | **wt%** |
|---|---|
| Durum semolina | 57.4 |
| Whole egg liquid | 1.3 |
| Oat bran meal Oatwell® (22% beta-glucan) | 18.3 |
| Wheat gluten | 2.6 |
| Potato starch | 9 |
| Casein Glycomacropeptide | 6.4 |

The above composition has the nutritional values shown in the table below:

**Table 2**

| **Nutrients** | **%** |
|---|---|
| Fat | 2.8 |
| Protein | 21 |
| Carbohydrate | 57 |
| Dietary fibre | 11 |

### Example 2

A typical list of ingredients in the preparation of a clear soup containing pasta inclusions according to the invention is given below.

| **Ingredients** | **%** |
|---|---|
| Salt, spices, flavours, herbs | 6 |
| Fat | 7 |
| Starches, flours | 2 |
| Maltodextrin | 31 |
| Pasta of the invention | 40 |
| Milk and animal protein | 10 |
| Vegetable powder and pieces | 4 |

### Example 3

A typical list of ingredients in the preparation of a creamy soup containing pasta inclusions according to the invention is given below.

| **Ingredients** | **%** |
|---|---|
| Salt, spices, flavours, herbs | 9 |
| Fat, cream | 7 |
| Starches, flours | 1 |
| Maltodextrin | 8 |
| Pasta of the invention | 30 |
| Milk and animal protein | 16 |
| Vegetable powder and pieces | 29 |

## Claims

1. Dry pasta composition, comprising a combination of at least 19% protein and at least 9% fibres, wherein the fibres are selected such that the pasta composition comprises at least 2% beta-glucan and the protein comprises at least 5 % dairy protein.

2. Dry pasta composition according to claim 1, wherein the protein is selected from any of meat protein, non soy derived leguminous protein, cereal protein, meat or fish protein and meat or fish protein hydrolysate, or any mixtures thereof.

3. Dry pasta composition according to claims 1 or 2, wherein the dairy protein is taken in the group consisting of whey protein, casein, caseinates and casein glycomacropeptides.

4. Dry pasta composition according to any of the preceding claims, wherein the fibres are selected from any of vegetables, whole cereals such as barley, oat , legumes such as peas, gums such as guar gum, acacia gum and inulins and any mixtures thereof or any mixtures thereof.

5. Dry pasta composition according to any of the preceding claims, wherein the fibres consist at least of 22% soluble viscous fibres.

6. Dry pasta composition according to any of the preceding claims, wherein beta-glucan is provided by oat and/or barley and/or beta-glucan concentrates.

7. Dry pasta composition according to any of the preceding claims, comprising a combination of 19-30% protein, 9-20% fibres, wherein the fibres are selected such that the beta-glucan content is at least 2%.

8. Use of a dry pasta composition according to any of claims 1 to 7 in dehydrated food compositions.

9. Use according to claim 8, wherein the dehydrated food composition is a soup or a pasta-based meal.

10. Use according to claim 8 or 9, wherein the pasta is present in the dehydrated food composition in an amount of 10-90%.

11. Use of a dry pasta composition according to any of claims 1 to 7 in a food composition for inducing satiety upon consumption of said food composition.

12. Use according to any of claims 8 to 11, wherein the pasta composition is a protein and fibre carrier in the food composition.

13. Use according to any of claims 8 to 12, wherein the food composition comprises at least 17% protein.

14. Use according to any of claims 8 to 13, wherein the food composition comprises at least 3% fibres.

15. Method for the preparation of a satiety-inducing food composition comprising the step of
a. providing a pre-cooked dry pasta composition according to any of claims 1 to 7 and
b. further processing the pasta composition.

16. Method according to claim 15, wherein the further processing includes cooking or soaking in a liquid having a temperature of at least 80°C, preferably for up to 5 minutes.

## Patentansprüche

1. Trockene Pasta-Zusammensetzung, die eine Kombination von mindestens 19% Protein und mindestens 9% Ballaststoffen enthält, wobei die Ballaststoffe so ausgewählt sind, dass die Pasta-Zusammensetzung mindestens 2% Beta-Glucan enthält und das Protein mindestens 5% Milchprotein enthält.

2. Trockene Pasta-Zusammensetzung nach Anspruch 1, wobei das Protein ausgewählt ist aus jedem von Fleischprotein, nicht aus Soja gewonnenem Leguminosenprotein, Getreideprotein, Fleisch- oder Fischprotein und Fleisch- oder Fischproteinhydrolysat, oder jeder Mischung davon.

3. Trockene Pasta-Zusammensetzung nach den Ansprüchen 1 oder 2, wobei das Milchprotein aus der Gruppe bestehend Molkeprotein, Casein, Caseinaten und Casein-Glycomacropeptiden genommen ist.

4. Trockene Pasta-Zusammensetzung nach einem der vorhergehenden Ansprüche, wobei die Ballaststoffe ausgewählt sind aus jedem von Gemüse, Vollgetreide wie beispielweise Gerste, Hafer, Leguminosen wie beispielsweise Erbsen, Gummen wie beispielsweise Guarkernmehl, Johannisbrotkernmehl und Inulinen und beliebigen Mischungen davon, oder beliebige Mischungen davon.

5. Trockene Pasta-Zusammensetzung nach einem der vorhergehenden Ansprüche, wobei die Ballaststoffe aus mindestens 22% löslichen viskosen Ballaststoffen bestehen.

6. Trockene Pasta-Zusammensetzung nach einem der vorhergehenden Ansprüche, wobei Beta-Glucan von Hafer und/oder Gerste und/oder Beta-Glucan-Konzentraten bereitgestellt wird.

7. Trockene Pasta-Zusammensetzung nach einem der vorhergehenden Ansprüche, die eine Kombination von 19-30% Protein, 9-20% Ballaststoffen enthält, wobei die Ballaststoffe so ausgewählt sind, dass der Beta-Glucan-Gehalt mindestens 2% ist.

8. Verwendung einer trockenen Pasta-Zusammensetzung nach einem der Ansprüche 1 bis 7 in entwässerten Nahrungszusammensetzungen.

9. Verwendung nach Anspruch 8, wobei die entwässerte Nahrungszusammensetzung eine Suppe- oder Pasta-basierte Mahlzeit ist.

10. Verwendung nach Anspruch 8 oder 9, wobei die Pasta in der entwässerten Nahrungszusammensetzung in einer Menge von 10-90% vorliegt.

11. Verwendung einer trockenen Pasta-Zusammensetzung nach einem der Ansprüche 1 bis 7 in einer Nahrungszusammensetzung zur Herbeiführung von Sattheit nach Verzehr dieser Nahrungszusammensetzung.

12. Verwendung nach einem der Ansprüche 8 bis 11, wobei die Pasta-Zusammensetzung ein Protein- und Ballaststoffträger in der Nahrungszusammensetzung ist.

13. Verwendung nach einem der Ansprüche 8 bis 12, wobei die Nahrungszusammensetzung mindestens 17% Protein enthält.

14. Verwendung nach einem der Ansprüche 8 bis 13, wobei die Nahrungszusammensetzung mindestens 3% Ballaststoffe enthält.

15. Verfahren zur Herstellung einer Sattheit herbeiführenden Nahrungszusammensetzung, bei dem
a. eine vorgekochte trockene Pasta-Zusammensetzung nach einem der Ansprüche 1 bis 7 bereitgestellt wird und
b. die Pasta-Zusammensetzung weiterverarbeitet wird.

16. Verfahren nach Anspruch 15, wobei die Weiterberarbeitung Kochen oder Tränken in einer Flüssigkeit mit einer Temperatur von mindestens 80°C für vorzugsweise bis zu 5 Minuten umfasst.

## Revendications

1. Composition de pâte sèche, comprenant une combinaison d'au moins 19% de protéine et au moins 9 % de fibres, dans laquelle les fibres sont choisies de sorte que la composition de pâte comprenne au moins 2 % de bêta-glucane et que la protéine comprenne au moins 5 % de protéine d'origine laitière.

2. Composition de pâte sèche selon la revendication 1, dans laquelle la protéine est choisie parmi de la protéine de viande, de la protéine légumineuse non dérivée de soja, une protéine de céréale, une protéine de viande ou de poisson et un hydrolysat de protéine de viande ou de poisson, ou n'importe quels mélanges de ceux-ci.

3. Composition de pâte sèche selon les revendications 1 ou 2, dans laquelle la protéine laitière est prise dans le groupe constitué de protéine de lactosérum, caséine, caséinates et glycomacropeptides de caséine.

4. Composition de pâte sèche selon l'une quelconque des revendications précédentes, dans laquelle les fibres sont choisies parmi des légumes, des céréales entières telles que l'orge, l'avoine, des légumineux tels que des pois, des gommes telles que la gomme de guar, la gomme d'acacia et des inulines et n'importe quels mélanges de ceux-ci ou n'importe quels mélanges de ceux-ci.

5. Composition de pâte sèche selon l'une quelconque des revendications précédentes, dans laquelle les fibres consistent en au moins 22 % de fibres visqueuses solubles.

6. Composition de pâte sèche selon l'une quelconque des revendications précédentes, dans laquelle le bêta-glucane est fourni par de l'avoine et/ou de l'orge et/ou des concentrés de bêta-glucane.

7. Composition de pâte sèche selon l'une quelconque des revendications précédentes, comprenant une combinaison de 19 - 30 % de protéine, 9 - 20 % de fibres, dans laquelle les fibres sont sélectionnées de sorte que la teneur en bêta-glucane est d'au moins 2 %.

8. Utilisation d'une composition de pâte sèche selon l'une quelconque des revendications 1 à 7 dans des compositions alimentaires déshydratées.

9. Utilisation selon la revendication 8, dans laquelle la composition alimentaire déshydratée est une soupe ou un repas à base de pâte.

10. Utilisation selon la revendication 8 ou 9, dans laquelle les pâtes sont présentes dans la composition alimentaire déshydratée dans une quantité de 10 - 90 %.

11. Utilisation d'une composition de pâte sèche selon l'une quelconque des revendications 1 à 7 dans une composition alimentaire pour induire la satiété après la consommation de ladite composition alimentaire.

12. Utilisation selon l'une quelconque des revendications 8 à 11, dans laquelle la composition de pâte est un vecteur de protéine et de fibres dans la composition alimentaire.

13. Utilisation selon l'une quelconque des revendications 8 à 12, dans laquelle la composition alimentaire comprend au moins 17 % de protéine.

14. Utilisation selon l'une quelconque des revendications 8 à 13, dans laquelle la composition alimentaire comprend au moins 3 % de fibres.

15. Procédé pour la préparation d'une composition alimentaire induisant la satiété comprenant les étapes consistant à
a. fournir une composition de pâte sèche précuite selon l'une quelconque des revendications 1 à 7 et
b. traiter de manière additionnelle la composition de pâte.

16. Procédé selon la revendication 15, dans lequel le traitement additionnel inclut une cuisson ou une immersion dans un liquide ayant une température d'au moins 80 °C, de préférence pour un maximum de 5 minutes.
